# EUROPÄISCHE PATENTSCHRIFT

(11) **EP 0 479 083 B1**
(45) Veröffentlichungstag und Bekanntmachung des Hinweises auf die Patenterteilung: **29.11.1995**
(21) Anmeldenummer: 91116120.6
(22) Anmeldetag: 23.09.1991
(51) Int. Cl.: C08K 5/11, C08K 5/12, C08L 23/16, C08L 23/22, C08L 15/00

(54) **Schwefel-vulkanisierbare Kautschukmassen mit verbessertem Vulkanisationsgrad**
Sulphur vulcanisable rubber composition having an improved degree of vulcanisation
Compositions de caoutchouc vulcanisables au soufre ayant un degré de vulcanisation amélioré

(30) Priorität: 05.10.1990 DE 4031566
(43) Veröffentlichungstag der Anmeldung: 08.04.1992
(73) Patentinhaber: BAYER AG, 51368 Leverkusen (DE)
(72) Erfinder: Thörmer, Joachim, Dr., W-5090 Leverkusen 1 (DE); Scholl, Thomas, Dr., W-5060 Bergisch Gladbach 2 (DE)

(56) Entgegenhaltungen:
- EP-A- 0 386 499

## Beschreibung

Die Erfindung betrifft vulkanisierbare Kautschukmassen, die Schwefel als Vulkanisiermittel, einen Thiuram- (und gegebenenfalls einen Thiazol-) Beschleuniger sowie das Salz eines partiellen Di- bzw. Tricarbonsäureesters, vorzugsweise Bernsteinsäurehalbesters und/oder Glutarsäurehalbesters, als Vulkanisationspromotor enthalten, ein Verfahren zur Herstellung dieser Kautschukmassen durch Mischen der Komponenten und die Verwendung dieser Kautschukmassen zur Herstellung von Vulkanisaten.

Als Vulkanisationsbeschleuniger werden bekanntlich Substanzen bezeichnet, die die Vulkanisationszeit verkürzen oder eine Vulkanisation bei niedrigerer Temperatur ermöglichen; vgl. Ullmanns Encyclopädie der technischen Chemie, 3. Aufl., Urban & Schwarzenberg, München-Berlin 1957, S. 383 ff. Zur Entfaltung der vollen Wirksamkeit der Vulkanisationsbeschleuniger werden gegebenenfalls Zusatzbeschleuniger mitverwendet.

Für die Schwefelvulkanisation werden häufig sogenannte "EV-Systeme" ("EV " = efficient vulcanization) eingesetzt, wobei man als Vulkanisationsbeschleuniger zumeist Thiuramverbindungen wie Tetraalkylthiurammonosulfide (z.B. Tetramethylthiurammonosulfid), Tetraalkylthiuramtetrasulfide (z.B. Tetramethylthiuramtetrasulfid) und vorzugsweise Tetraalkylthiuramdisulfide (z.B. Tetramethylthiuramdisulfid, nachfolgend: TMTD) verwendet. Wegen ihrer ausgezeichneten Wirkung werden diese Thiuramverbindungen auch als Ultrabeschleuniger bezeichnet; insbesondere führen sie zu einer guten Heißluftbeständigkeit der damit hergestellten Vulkanisate.

Thiuramverbindungen haben die Eigenschaft, daß sie selbst oder die während der Vulkanisation daraus entstehenden Umsetzungsprodukte zum Ausblühen neigen; Folge ist eine unerwünschte Belagbildung auf dem Vulkanisat. Die Ausblühtendenz wird u.a. von der Art des Kautschuks und von der Konzentration der Thiuramverbindung beeinflußt (vergl. W. Hofmann in Gummi-Asbest-Kunststoffe 9 (1986), S. 422 ff).

Vulkanisate aus Kautschuken mit geringem Gehalt an C=C-Doppelbindungen wie EPDM, Butylkautschuk und vorzugsweise Nitrilkautschuk, dessen C=C-Doppelbindungen selektiv, aber nicht vollkommen hydriert sind, so daß sie noch einer Schwefelvernetzung zugänglich sind, weisen oft einen niedrigen Vernetzungsgrad auf, der an niedrigen Spannungswerten und an einem mäßigen Druckverformungsrest (nachfolgend: DVR; allgemein auch Compression Set genannt; gemessen nach Druckverformung in der Hitze, z.B. in Heißluft oder in heißem Öl) erkennbar ist. Der Anhebung des DVR durch höhere Mengen Thiuramverbindung sind wegen des geschilderten Ausblühphänomens Grenzen gesetzt.

Überraschenderweise wurde nun gefunden, daß ein Vulkanisiersystem enthaltend Schwefel in geringer Menge (gegebenenfalls in Form eines Schwefelspenders), Thiurambeschleuniger, gegebenenfalls Thiazolbeschleuniger, und als Vulkanisationspromotor das Salz eines partiellen Di- bzw. Tricarbonsäureesters einen ausgezeichneten Vernetzungsgrad mit hohen Spannungswerten und niedrigen Druckverformungsresten, insbesondere nach Alterung bei höherer Temperatur, ergibt. Daneben findet man eine verbesserte Verarbeitbarkeit und eine verbesserte Heißluftalterung.

Durch den Vulkanisationspromotor läßt sich die Schwefelmenge reduzieren, ohne daß wesentliche Vulkanisateigenschaften nachteilig verändert werden. Die erniedrigte Schwefelmenge ist für die Alterung von Vorteil und ermöglicht andererseits eine bessere Covulkanisation von doppelbindungsarmen Kautschuken mit Dienkautschuken, wie z.B. von partiell hydriertem NBR mit normalem NBR.

Gegenstand der Erfindung sind also vulkanisierbare Kautschukmassen auf Basis von C=C-doppelbindungsarmem Kautschuk mit Johdzahlen von 2 bis 35 nach DIN 53241 enthaltend 0,2 bis 1 Gew.-% Schwefel, 1 bis 3,5 Gew.-% Thiurambeschleuniger, gegebenenfalls bis zu 2, vorzugsweise 0,2 bis 1 Gew.-% Thiazolbeschleuniger, und
0,1 bis 8, vorzugsweise 0,3 bis 6, insbesondere 0,8 bis 4, Gew.-% Salz eines partiellen Di- und/oder Tricarbonsäureesters,
wobei sich die Prozentangaben jeweils auf den zu vulkanisierenden Kautschuk beziehen.

Weiterer Gegenstand der Erfindung ist ein Verfahren zur Herstellung dieser Kautschukmassen durch Mischen der Komponenten und ihre Verwendung zur Herstellung von Vulkanisaten.

C=C-Doppelbindungsarme Kautschuke im Sinne der Erfindung umfassen solche mit Iodzahlen von 2 bis 35, vorzugsweise von 3 bis 30, insbesondere von 5 bis 25. Die Bestimmung der Iodzahlen erfolgt im allgemeinen durch Addition von Iodchlorid in Eisessig nach Wijs, DIN 53 241, Teil 1. Die Iodzahl definiert die Iodmenge in Gramm, die von 100 g Substanz chemisch gebunden wird. Beispiele für bevorzugte Kautschuke sind EPDM, Butylkautschuk und vorzugsweise hydrierter Nitrilkautschuk.

Die Kautschuke besitzen vorzugsweise Glasübergangstemperaturen unter 0°C, insbesondere unter -10°C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C-C-Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Den bevorzugten hydrierten Nitrilkautschuken liegen Butadien/Acrylnitril-Copolymerisate mit einem Gehalt an copolymerisiertem Acrylnitril von 5 bis 60, vorzugsweise 10 bis 50 Gew.-% zugrunde. "Hydriert" bedeutet in diesem Zusammenhang, daß 90 bis 99, vorzugsweise 95 bis 98,5 %, insbesondere 96 bis 98,5%, der hydrierbaren C=C-Doppelbindungen hydriert sind. Der Hydriergrad kann IR-spektroskopisch bestimmt werden.

Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503. Hydrierter Nitrilkautschuk zeichnet sich vor allem durch vergleichsweise hohe Stabilität gegen Oxidation aus.

Die für das erfindungsgemäße Verfahren geeigneten Kautschuke besitzen in der Regel Mooney-Viskositäten (DIN 53 523), von 10 bis 150, vorzugsweise von 25 bis 80 (ML 1+4)/100°C.

Bevorzugte Thiurambeschleuniger umfassen z.B. die obengenannten Tetraalkylthiurammono- und -polysulfide, wobei die Alkylgruppen in der Regel 1 bis 4, vorzugsweise 1 oder 2 C-Atome besitzen; die Substituenten können aber auch cycloaliphatisch, aromatisch oder araliphatisch sein.

Bevorzugte Thiazolbeschleuniger, die erfindungsgemäß gegebenenfalls mitverwendet werden, umfassen insbesondere
2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Bevorzugte partielle Di- und Tricarbonsäureester (im Falle von Dicarbonsäureestern: die Halbester; im Falle von Tricarbonsäureestern: die Diester), deren Salze erfindungsgemäß als Vulkanisationspromotoren verwendet werden, umfassen die Veresterungsprodukte von aliphatischen C₄-C₁₀-Dicarbonsäuren (vorzugsweise Adipinsäure, insbesondere Bernsteinsäure, Glutarsäure), von cycloaliphatischen C₈-C₁₂-Dicarbonsäuren (vorzugsweise Tetrahydrophthalsäure, Hexahydrophahtalsäure), aliphatischen C₆-C₁₂-Tricarbonsäuren (vorzugsweise Zitronensäure), C₈-C₁₄-Benzoldi- und -tricarbonsäuren (vorzugsweise Phthalsäure, Isophthalsäure, Terephthalsäure, Trimesinsäure, Trimellithsäure) mit C₁-C₁₈-, vorzugsweise C₄-C₁₈-Alkoholen. Die Alkoholkomponenten können aliphatisch, cycloaliphatisch, araliphatisch und aromatisch sein; sie können (cyclo)olefinische C=C-Doppelbindungen ebenso wie Halogensubstituenten, z.B. Chlorsubstituenten enthalten, und sie können linear oder verzweigt sein. Bevorzugte Alkoholkomponenten umfassen Methanol, Isopropanol, n-, iso- und tert.-Butanol, Hexanol, Octanol, Decanol, Dodecanol, Stearylalkohol, Cyclohexanol, Benzylalkohol, Phenol. Bernsteinsäuremonooctylester und Glutarsäuremonobutylester sind besonders bevorzugt.

Die Kationen der erfindungsgemäß zu verwendenden Salze partieller Ester leiten sich vorzugsweise von Alkali- und Erdalkalimetallen und von Zink ab, wobei die Zinksalze besonders zu bevorzugen sind.

Den Kautschuken kann man vor der Vulkanisation Vulkanisationshilfsmittel und - je nach Bedarf - Aktivatoren, Füllstoffe, wie z.B. Ruß, Weichmacher, Alterungsschutzmittel und/oder Verarbeitungshilfsmittel in üblichen Mengen zusetzen.

Die bedeutendsten anorganischen Aktivatoren sind die Metalloxide, insbesondere Zinkoxid. In einzelnen Fällen wird auch Magnesiumoxid oder Calciumhydroxid verwendet.

Als Verarbeitungshilfsmittel kommen beispielsweise Fettsäuren, wie z.B. Stearinsäure, in Frage.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 sec⁻¹, vorzugsweise 1 bis 200 sec⁻¹ arbeiten.

Die Vulkanisation kann bei Temperaturen von 100 bis 200°C, vorzugsweise 130 bis 180°C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern oft noch verbessern.

Die erfindungsgemäß erhältlichen Vulkanisate sind hervorragende Materialien für Treib- bzw. Zahnriemen, bei denen ihr hohes Rückstellvermögen zur Geltung kommt. Außerdem zeigen sie als Dichtungsmaterialien jeglicher Art ausgezeichnete Eigenschaften und können u. a. als Schlauch-Seele oder -Mantel Verwendung finden. Sie können auch zur Gummierung von Textilien, zur Auskleidung von Hohlräumen und als Isolations- und Mantelmaterial im Kabelsektor eingesetzt werden. Auch zur Herstellung von Reibbelägen sind die Vulkanisationssysteme verwendbar.

### Beispiele

Als Kautschuk wurde für die nachfolgenden Beispiele ein hydriertes Acrylnitril/Butadien-Copolymerisat mit einem Acrylnitrilgehalt von 33,7 Gew.-%, einem Hydrierungsgrad von 96,4 %, bezogen auf ursprünglich vorhandene C=C-Doppelbindungen, und einer Mooney-Viskosität von 67 (ML 1 + 4) 100°C (®Therban 1707 S der Bayer AG) eingesetzt.

In einem Laborkneter wurden bei 50°C 100 Teile Kautschuk 0,5 Minuten lang mastiziert und dann 0,51 Teile Schwefel, 1 Teil Stearinsäure, 2 Teile Zinkoxid, 1 Teil octyliertes Diphenylamin (®Vulkanox OCD der Bayer AG), 0,4 Teile Zink-Methylmercaptobenzimidazol (®Vulkanox ZMB2 der Bayer AG) und 45 Teile Ruß (Corax N550 der Fa. Degussa /Wesseling)und wechselnden Mengen (siehe Tabelle 1) des Zinksalzes des Bernsteinsäureoctylhalbesters zugegeben und bis zur Homogenisierung geknetet (4,5 Minuten).

Nach Abkühlen der Kautschukmasse auf ca. 100°C auf einer Walze wurde ein Beschleunigersystem bestehend aus 2 Teilen Tetramethylthiuramdisulfid (®Vulkacit Thiuram C der Bayer AG) und 0,5 Teilen Benzothiazyl-2-cyclohexylsulfenamid (®Vulkacit CZ der Bayer AG) zugemischt.

Die Eigenschaften der erhaltenen Mischungen werden nachfolgend aufgelistet:

| | | | |
|---|---|---|---|
| Therban 1707 S | 100 | 100 | 100 |
| Schwefel | 0,51 | 0,51 | 0,51 |
| Vulkanox OCD | 1 | 1 | 1 |
| Vulkanox ZMB2 | 0,4 | 0,4 | 0,4 |
| Ruß N 550 | 45 | 45 | 45 |
| Zinkoxid | 5 | 5 | 5 |
| Stearinsäure | 0,5 | 0,5 | 0,5 |
| Vulkacit Thiuram C | 2 | 2 | 2 |
| Vulkacit CZ | 0,5 | 0,5 | 0,5 |
| Zink-Bernsteinsäureoctylhalbester | - | 1,5 | 3 |
| Mooney-Visk. ML1+4/120°C | 78 | 76 | 76 |
| Mooney-Scorch bei 130°C (min) | 18,5 | 18,6 | 17,3 |

| Vulkameter 160°C | | | |
|---|---|---|---|
| t₁₀ (min) | 4.5 | 4,8 | 4,8 |
| t₈₀ (min) | 7,9 | 8,2 | 9,0 |
| Fmin (N) | 2,1 | 2,1 | 2,0 |
| Fmax (N) | 58,4 | 58,6 | 57,6 |
| Vulkanisation 30 Min./160°C | (S2-Stäbe, DIN 53502+53504 | | |
| Zugfestigkeit (MPa) | 29,7 | 29,8 | 30,1 |
| Bruchdehnung (%) | 490 | 480 | 480 |
| Spannungswert S₁₀₀ (MPa) | 3,8 | 4,2 | 4,3 |
| Shore-Härte | 72 | 72 | 73 |
| C.S.*Probek. II 70 h/100°C (%) | 59,2 | 47,7 | 44,4 |
| C.S.*, Probek. I, 70 h/100°C mit Temp. 6 h/150°C (%) | 44,8 | 30,3 | 25,2 |
| rel. Dehnung (%), nach Heißlufthaltung (10 Tage/150°C) | 41 | 54 | 52 |

| | | | |
|---|---|---|---|
| * Compression Set | | | |

## Patentansprüche (Patentansprüche für folgende(n) Vertragsstaat(en): DE, FR, GB, IT, NL)

1. Vulkanisierbare Kautschukmassen auf Basis von C=C-doppelbindungsarmem Kautschuk mit Jodzahlen von 2 bis 35 nach DIN 53241 enthaltend 0,2 bis 1 Gew.-% Schwefel,
1 bis 3.5 Gew.-% Thiurambeschleuniger,
gegebenenfalls bis zu 2 Gew.-% Thiazolbeschleuniger und
0,1 bis 8 Gew.-% Salz eines partiellen Di- und/oder Tricarbonsäureesters,
wobei sich die Prozentangaben jeweils auf den zu vulkanisierenden Kautschuk beziehen.

2. Kautschukmassen nach Anspruch 1, wobei die Alkoholkomponente des partiellen Esters 1 bis 18 Kohlenstoffatome enthält.

3. Kautschukmassen nach Anspruch 1, wobei die Alkoholkomponente des partiellen Esters 4 bis 18 Kohlenstoffatome enthält.

4. Kautschukmassen nach Anspruch 1, wobei die Säurekomponente des partiellen Esters aus der Reihe der aliphatischen C₄-C₁₀-Dicarbonsäuren ausgewählt ist.

5. Kautschukmassen nach Anspruch 1, wobei die Säurekomponente des partiellen Esters aus der Reihe der C₈-C₁₄-Benzoldi- und -tricarbonsäuren ausgewählt ist.

6. Kautschukmassen nach Anspruch 1, wobei die Zinksalze der partiellen Di- und/oder Tricarbonsäureester eingesetzt werden.

7. Verfahren zur Herstellung der Kautschukmassen nach Ansprüchen 1 bis 6 durch Mischen der Komponenten.

8. Verwendung der Kautschukmassen nach Ansprüchen 1 bis 6 zur Herstellung von Vulkanisaten.

## Patentansprüche (Patentansprüche für folgende(n) Vertragsstaat(en): ES)

1. Verfahren zur Herstellung von vulkanisierbaren Kautschukmassen auf Basis von C=C-doppelbindungsarmem Kautschuk mit Jodzahlen von 2 bis 35 nach DIN 53241 enthaltend 0,2 bis 1 Gew.-% Schwefel,
1 bis 3,5 Gew.-% Thiurambeschleuniger,
gegebenenfalls bis zu 2 Gew.-% Thiazolbeschleuniger und
0,1 bis 8 Gew.-% Salz eines partiellen Di- und/oder Tricarbonsäureesters,
wobei sich die Prozentangaben jeweils auf den zu vulkanisierenden Kautschuk beziehen, durch Mischen der Komponenten.

2. Verfahren zur Herstellung von Kautschukmassen nach Anspruch 1, wobei die Alkoholkomponente des partiellen Esters 1 bis 18 Kohlenstoffatome enthält.

3. Verfahren zur Herstellung von Kautschukmassen nach Anspruch 1, wobei die Alkoholkomponente des partiellen Esters 4 bis 18 Kohlenstoffatome enthält.

4. Verfahren zur Herstellung von Kautschukmassen nach Anspruch 1, wobei die Säurekomponente des partiellen Esters aus der Reihe der aliphatischen C₄-C₁₀-Dicarbonsäuren ausgewählt ist.

5. Verfahren zur Herstellung von Kautschukmassen nach Anspruch 1, wobei die Säurekomponente des partiellen Esters aus der Reihe der C₈-C₁₄-Benzoldi- und -tricarbonsäuren ausgewählt ist.

6. Verwendung der Kautschukmassen nach Ansprüchen 1 bis 5 zur Herstellung von Vulkanisaten.

## Claims (Claims for the following Contracting State(s): DE, FR, GB, IT, NL)

1. Vulcanisable rubber compositions based on rubber having a low C=C double bond content with iodine values of 2 to 35 to DIN 53 241, containing 0.2 to 1 wt.% of sulphur,
1 to 3.5 wt.% of thiuram accelerator,
optionally up to 2 wt.% of thiazole accelerator and 0.1 to 8 wt.% of salt of a partial di- and/or tricarboxylic acid ester,
wherein the percentages relate in each case to the rubber to be vulcanised.

2. Rubber compositions according to claim 1, wherein the alcohol component of the partial ester contains 1 to 18 carbon atoms.

3. Rubber compositions according to claim 1, wherein the alcohol component of the partial ester contains 4 to 18 carbon atoms.

4. Rubber compositions according to claim 1, wherein the acid component of the partial ester is selected from the range of aliphatic C₄-C₁₀ dicarboxylic acids.

5. Rubber compositions according to claim 1, wherein the acid component of the partial ester is selected from the range of C₈-C₁₄ benzenedicarboxylic and benzenetricarboxylic acids.

6. Rubber compositions according to claim 1, wherein the zinc salts of the partial di- and/or tricarboxylic acid esters are used.

7. Process for the production of the rubber compositions according to claims 1 to 6 by mixing the components.

8. Use of the rubber compositions according to claims 1 to 6 for the production of vulcanisates.

## Claims (Claims for the following Contracting State(s): ES)

1. Process for the production of vulcanisable rubber compositions based on rubber having a low C=C double bond content with iodine values of 2 to 35 to DIN 53 241, containing 0.2 to 1 wt.% of sulphur,
1 to 3.5 wt.% of thiuram accelerator,
optionally up to 2 wt.% of thiazole accelerator and 0.1 to 8 wt.% of salt of a partial di- and/or tricarboxylic acid ester,
wherein the percentages relate in each case to the rubber to be vulcanised, by mixing the components.

2. Process for the production of rubber compositions according to claim 1, wherein the alcohol component of the partial ester contains 1 to 18 carbon atoms.

3. Process for the production of rubber compositions according to claim 1, wherein the alcohol component of the partial ester contains 4 to 18 carbon atoms.

4. Process for the production of rubber compositions according to claim 1, wherein the acid component of the partial ester is selected from the range of aliphatic C₄-C₁₀ dicarboxylic acids.

5. Process for the production of rubber compositions according to claim 1, wherein the acid component of the partial ester is selected from the range of C₈-C₁₄ benzenedicarboxylic and benzenetricarboxylic acids.

6. Use of the rubber compositions according to claims 1 to 5 for the production of vulcanisates.

## Revendications (Revendications pour l'(les) Etat(s) contractant(s) suivant(s): DE, FR, GB, IT, NL)

1. Masses de caoutchoucs vulcanisables à base de caoutchoucs à faible teneur en doubles liaisons C = C, ayant des indices d'iode de 2 à 35 selon DIN 53 241, contenant
0,2 à 1 % en poids de soufre,
1 à 3,5 % en poids d'un accélérateur du type thiurame,
le cas échéant jusqu'à 2 % en poids d'un accélérateur du type thiazole et
0,1 à 8 % en poids d'un sel d'un ester partiel d'un acide di- et/ou tri-carboxylique,
tous les pourcentages indiqués se rapportant au caoutchouc à vulcaniser.

2. Masses de caoutchoucs selon la revendication 1, dans lesquelles le composant alcool de l'ester partiel contient 1 à 18 atomes de carbone.

3. Masses de caoutchoucs selon la revendication 1, dans lesquelles le composant alcool de l'ester partiel contient 4 à 18 atomes de carbone.

4. Masses de caoutchoucs selon la revendication 1, dans lesquelles le composant acide de l'ester partiel est choisi parmi les acides dicarboxyliques aliphatiques en C₄-C₁₀.

5. Masses de caoutchoucs selon la revendication 1, dans lesquelles le composant acide de l'ester partiel est choisi parmi les acides benzène-di- et -tri-carboxyliques en C₈-C₁₄.

6. Masses de caoutchoucs selon la revendication 1, dans lesquelles on a utilisé les sels de zinc des esters partiels d'acides di- et/ou tri-carboxyliques.

7. Procédé de préparation des masses de caoutchoucs selon les revendications 1 à 6 par mélange des composants.

8. Utilisation des masses de caoutchoucs selon les revendications 1 à 6 pour la fabrication de vulcanisats.

## Revendications (Revendications pour l'(les) Etat(s) contractant(s) suivant(s): ES)

1. Procédé de préparation de masses de caoutchoucs vulcanisables à base de caoutchoucs à faible teneur en doubles liaisons C = C, ayant des indices d'iode de 2 à 35 selon DIN 53 241, contenant
0,2 à 1 % en poids de soufre,
1 à 3,5 % en poids d'un accélérateur du type thiurame,
le cas échéant jusqu'à 2 % en poids d'un accélérateur du type thiazole et
0,1 à 8 % en poids d'un sel d'un ester partiel d'acide di- et/ou tri-carboxylique,
les pourcentages indiqués se rapportant au caoutchouc à vulcaniser, par mélange des composants.

2. Procédé de préparation de masses de caoutchouc selon la revendication 1, dans lequel le composant alcool de l'ester partiel contient 1 à 18 atomes de carbone.

3. Procédé de préparation de masses de caoutchouc selon la revendication 1, dans lequel le composant alcool de l'ester partiel contient 4 à 18 atomes de carbone.

4. Procédé de préparation de masses de caoutchouc selon la revendication 1, dans lequel le composant acide de l'ester partiel est choisi parmi les acides dicarboxyliques aliphatiques en C₄-C₁₀.

5. Procédé de préparation de masses de caoutchouc selon la revendication 1, dans lequel le composant acide de l'ester partiel est choisi parmi les acides benzène-di- et -tri-carboxyliques en C₈-C₁₄.

6. Utilisation des masses de caoutchoucs selon les revendications 1 à 5 pour la fabrication de vulcanisats.
